# EUROPEAN PATENT SPECIFICATION

(11) **EP 3 575 501 B1**
(45) Date of publication and mention of the grant of the patent: **23.08.2023**
(21) Application number: 19176325.9
(22) Date of filing: 23.05.2019
(51) Int. Cl.: E02F 9/20, B62D 1/22, E02F 9/22

(54) **WORK MACHINE WITH TRAVEL MODE AND SECONDARY STEERING CONTROLS**
ARBEITSMASCHINE MIT FAHRMODUS UND SEKUNDÄRLENKUNGSSTEUERUNGEN
MACHINE DE TRAVAIL COMPORTANT UN MODE DE DÉPLACEMENT ET DES COMMANDES DE DIRECTION SECONDAIRES

(30) Priority: 30.05.2018 GB 201808770
(43) Date of publication of application: 04.12.2019
(73) Proprietor: Caterpillar Inc., Peoria, IL 61629-9510 (US)
(72) Inventor: VON BORNSTAEDT, Oliver, 92421 Schwandorf (DE); LIPPA, Tobias, 97421 Schwandorf (DE)
(74) Representative: Novagraaf Group

(56) References cited:
- JP-A- 2008 143 456
- US-A1- 2006 137 931
- US-A1- 2007 209 356
- US-A1- 2014 020 370
- US-B2- 8 606 463
- THOMSEN S ET AL: "ELEKTROHYDRAULISCHE LENKUNGSKONZEPTE HOEHERE PRODUKTIVITAET UND GROESSERER KOMFORT", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, vol. 47, no. 10, 1 October 2003 (2003-10-01), pages 650-652, XP001046676, ISSN: 0341-2660

## Description

### Technical Field

This disclosure relates to work machines equipped with primary and secondary steering controls.

### Background

In this specification, a work machine means a steerable land vehicle that is configured to manipulate a tool. A tool means a work implement which is mounted on a work machine and manipulable by the work machine to carry out an operation, often involving the application of substantial forces to objects or materials in the vicinity of the work machine. The tool is manipulable at least in the sense that it is movable relative to the body of the vehicle, although many such tools will include a mechanism which is also operable by the work machine.

A tool may comprise for example a bucket for digging or moving loose material, a hydraulic breaker, a grab, or any other useful work implement.

Work machines may be mounted on wheels or tracks and include for example excavators and backhoe loaders, in which typically the tool is mounted at the distal end of a first arm or stick, which in turn is mounted at the distal end of a second arm or boom with both arms being movable in rotation by a system of hydraulic actuators.

By way of example, a work machine may have a gross weight in excess of 5 tonnes, 10 tonnes, or 20 tonnes, up to as much as 100 tonnes or more, and may be configured to transmit a bending moment in excess of 10kNm, 20kNm, or 100kNm, up to as much as 500kNm or more to the tool in use.

Some work machines are equipped with a primary steering control, typically a conventional steering wheel, for use in steering the vehicle on the public road, and a secondary steering control for use as an alternative to the steering wheel in steering the vehicle off-road when the tool is in use, for example, on a construction site or other work location.

The secondary steering control is often configured as a joystick which may have multiple functions including controlling the tool. This makes it easy for the machine operator to synchronise the movements of the tool and the machine in use. However, it is important to deactivate the secondary steering control while the machine is travelling on the public road to ensure that inadvertent movement of the secondary steering control cannot interfere with the steering of the machine by the primary steering control.

Typically, work machines that are operable on the public road will have at least a first gear which is normally selected when the machine is in use on the work site, and a second gear which is selected for movement at higher speed on the road. In such machines it is known to arrange a hydraulic gearchange system to deactivate the secondary steering control when second gear is selected.

This ensures that the secondary steering control cannot give rise to unpredictable machine movements while the primary steering control is in use to steer the machine on the road in second gear.

For example, US 7,334,658 teaches a work machine such as a wheeled excavator having a work implement controllable by a joystick. The machine is steerable selectively by a first steering control such as a steering wheel, and a secondary steering control mounted on the joystick. The joystick steering function may be disabled when the machine is operating other than in first gear. An implement lockout switch may be provided for selectively disabling operation of the work implement, in which case the joystick steering function may be disabled by operation of the implement lockout switch. Another example is disclosed in document US2006/137931 A1.

It will be understood that many work machines comprise a hydrostatic drive system, and the term "gear" as used herein should be construed accordingly to mean a power transmission configuration which provides a defined range of ground speed, irrespective of the nature of the transmission.

### Summary

Accordingly the present disclosure provides in a first aspect a work machine, hereinafter referred to simply as a "machine", and in a second, related aspect, a method of controlling the work machine.

The work machine includes a machine base for supporting the work machine on a ground surface, and is further provided with a speed range control operable by a user to select a respective one of a low ground speed range and a high ground speed range, and a drive system controllable by the user to drive the machine in a direction of movement over the ground surface at a maximum ground speed within the selected ground speed range.

The machine is further provided with a primary steering control and a secondary steering control which are selectively and independently operable by the user to control the direction of movement of the machine over the ground surface.

The machine is further provided with a tool actuation system and a travel mode control. The tool actuation system is operable by the user in a work mode of the machine to manipulate a tool mounted on the tool actuation system with at least one degree of freedom relative to the machine base.

The travel mode control is operable by the user to configure the machine selectively for operation in the work mode and in a travel mode, wherein in the travel mode the tool actuation system is disabled to prevent movement of the tool in said at least one degree of freedom relative to the machine base, and the secondary steering control is disabled so that only the primary steering control is operable by the user to control the direction of movement of the machine over the ground surface.

The speed range control is operable and the drive system is controllable by the user to drive the machine at a maximum ground speed within either selected one of the low ground speed range and the high ground speed range in both the travel mode and the work mode.

Optionally, the maximum ground speed in the high ground speed range may be reduced when the machine is in work mode relative to the maximum ground speed in travel mode.

Optionally, the secondary steering control system and tool actuation system may be configured to control the steering and tool respectively, dependent on a common pilot pressure supply which is depressurised when travel mode is selected.

Optionally, a secondary steering deselector control may be provided for disabling the secondary steering control, and the travel mode control may be operable only after operation of the secondary steering deselector control. Optionally in this case, the secondary steering deselector control may be operable to interrupt a control signal from the secondary steering control, while the travel mode control is configured to depressurise a common pilot pressure supply as described above.

Optionally, the secondary steering control may be combined with control of the tool in a multifunctional joystick.

### Brief Description of the Drawings

Further features and advantages will become apparent from the following illustrative embodiment which will now be described, purely by way of example and with reference to the accompanying drawings, in which:
Figs. 1 and 2 show a machine in accordance with a first embodiment, respectively in work mode (Fig. 1) and travel mode (Fig. 2);
Fig. 3 is a simplified schematic drawing of the power and control system of the machine;
Figs. 4, 5, 6 and 7 show four different control sequences carried out on a touchscreen control panel of the machine including the travel mode control and a secondary steering deselector control, wherein:

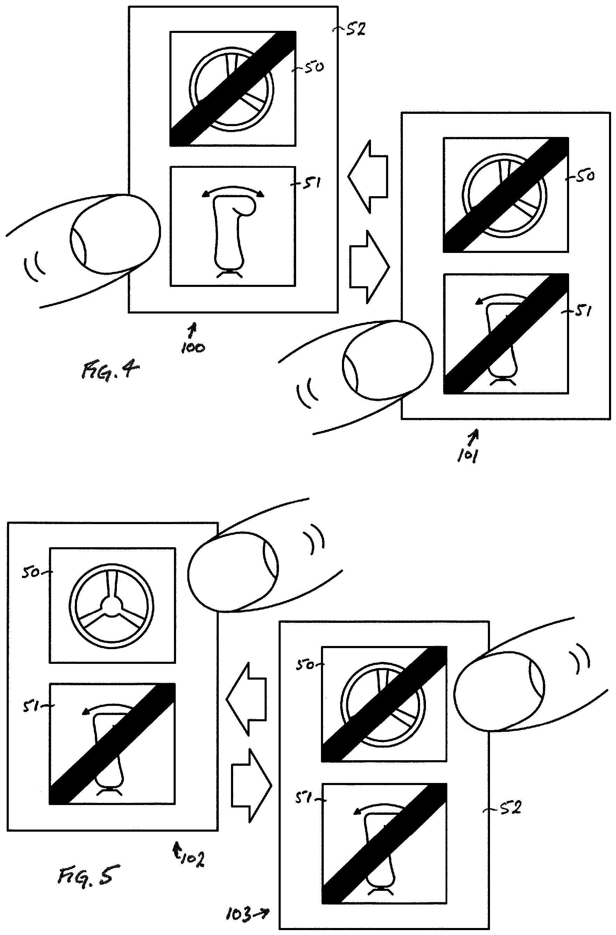

   Fig. 4 shows how the secondary steering is selected and deselected while the machine is in work mode;
   Fig. 5 shows how travel mode is selected and deselected while the secondary steering control is disabled;

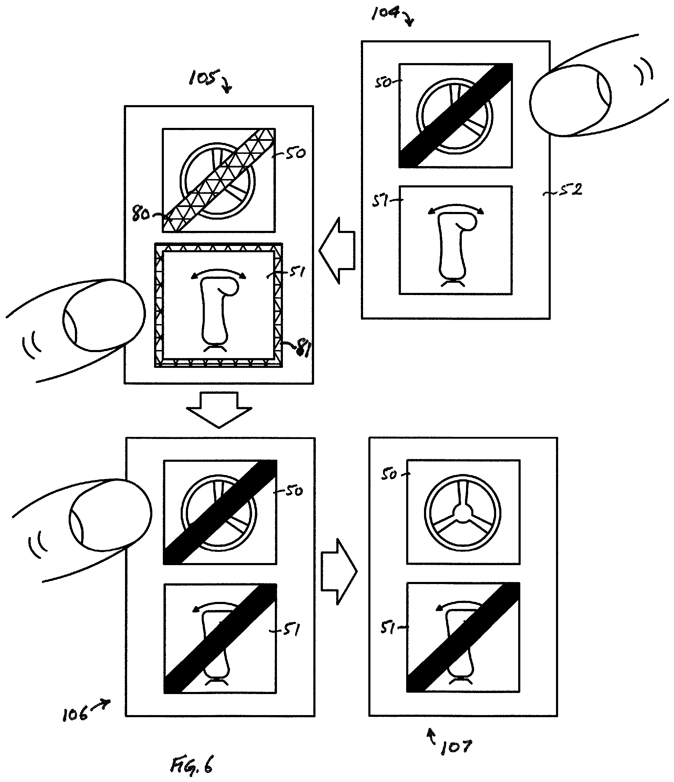

   Fig. 6 shows how travel mode cannot be selected until the secondary steering control is disabled; and

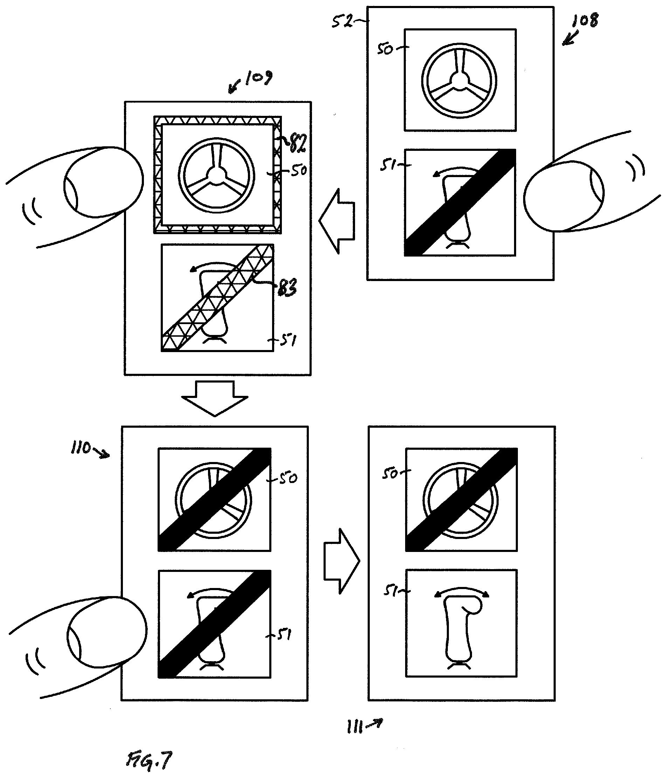

   Fig. 7 shows how the secondary steering control cannot be re-enabled until travel mode is deselected; and

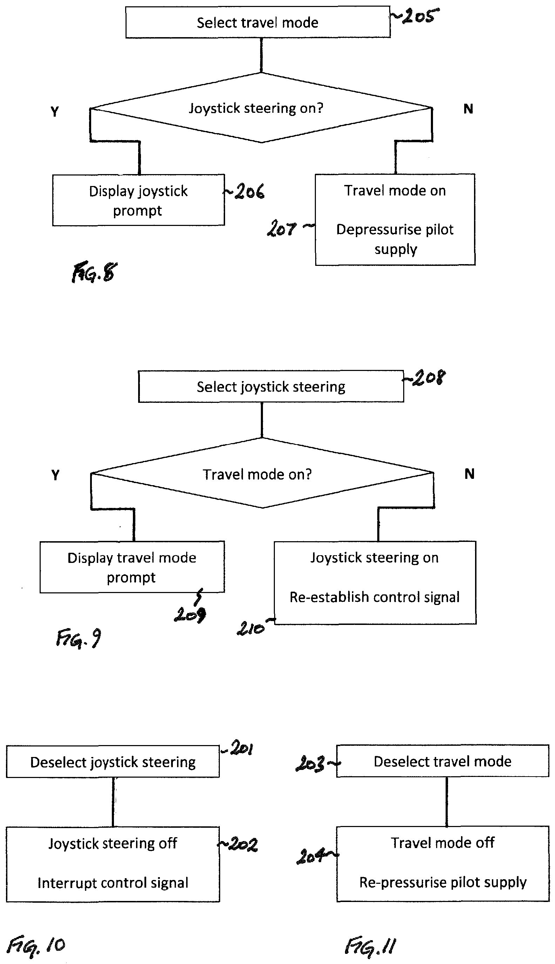

Figs. 8, 9, 10 and 11 show four different control sequences of a logic controller of the machine wherein:
   Fig. 8 shows how travel mode is selected;
   Fig. 9 shows how the secondary steering control is enabled;
   Fig. 10 shows how the secondary steering control is disabled; and
   Fig. 11 shows how travel mode is deselected.

Reference numerals or characters appearing in more than one of the figures indicate the same or corresponding elements in each of them.

### Detailed Description

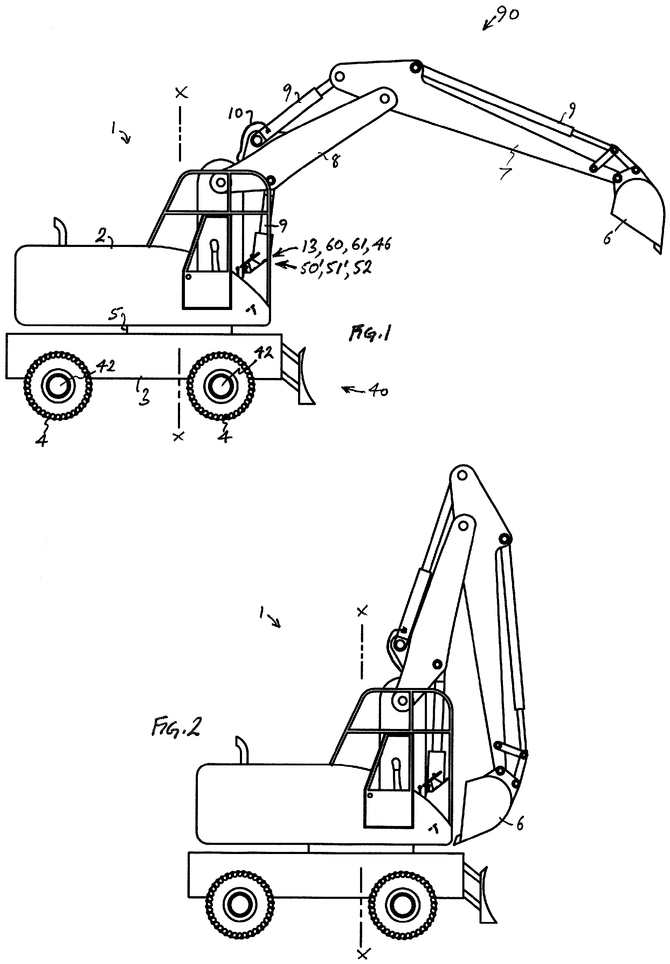

Referring to Figs. 1, 2 and 3, a machine 1 is illustrated by way of example as a wheel excavator comprising a body 2 mounted on a machine base 3 with wheels 4 for supporting the machine on the ground surface. A slewing ring 5 is provided to enable the body 2 to slew, i.e. to rotate about a vertical axis X, relative to the machine base. The machine may comprise one or more hydraulic pumps 30 powered by a prime mover or engine 31.

A tool 6 which may comprise a bucket as shown is releasably and interchangeably mounted on a tool actuation system 90 including an arm or stick 7 pivotably mounted at the distal end of another arm or boom 8. The bucket, stick and boom are pivotable by tool actuators 9 which in the illustrated embodiment are configured as hydraulic rams powered by hydraulic fluid supplied via hydraulic supply lines 10 from the pump or pumps 30 under the control of a tool motion control valve 11 to manipulate the tool responsive to user commands received as signals 12 from one or more tool controls 13 operable by the user while the work machine is in work mode.

As in the illustrated embodiment, the machine may include a central controller 20 including a processor, memory and control software as known in the art as well as input lines from sensors (not shown) which provide feedback on the state and position of each functional element of the machine including the tool actuators 9 and power, steering and drive control systems.

Generally herein, except where the context demands otherwise, the terms "signal", "control", and "command" and related terms indicate a functional relationship which may be implemented in any appropriate way, such as by electrical signals or pressure signals or mechanical linkages transmitting signals as movement.

In the illustrated embodiment the tool controls 13 include a group of user controls integrated into a joystick 14 and further include the joystick 14 itself, which may be movable with several degrees of freedom as well known in the art to control the angular orientation of the bucket and the speed and direction of movement of the stick and the boom.

The tool actuation system may also include an actuator (not shown) for slewing the machine body 2 on the base 3 and for locking the body in a forwardly facing travel orientation as shown in Figs. 1 and 2.

The tool motion control valve 11 may be operable by a pilot pressure supply 17 responsive to user commands from the tool controls 13 to control the tool actuator or actuators 9.

For example, the tool motion control valve 11 may comprise one or more pilot valves operable by a pilot pressure supply from a pilot pressure control unit 15. The or each pilot valve may be controlled by a solenoid or the like which receives electrical signals 12 via the central controller 20 from the tool controls 13 and, in response, moves the valve spool to apply the pilot pressure to one or more outlets, the outlets in turn controlling the motion of a group of further valves (not shown) which in turn apply the main supply pressure via lines 10 to the actuators 9.

The pilot pressure control unit 15 may be a valve arrangement which receives a pilot supply 16 of hydraulic fluid from the main hydraulic pump or a separate pilot pump 30 and supplies the pilot supply as a common pilot pressure supply 17 to the tool motion control valve 11 and to a secondary steering control valve 64 as further described below. The pilot pressure control unit 15 is configured to selectively depressurise the pilot pressure supply 17 (for example, by disconnecting the pilot pressure supply line 17 from the pilot supply 16 and connecting it to tank) responsive to a signal from the travel mode control 50, 50', as further described below.

The travel mode control 50, 50' may be configured in a failsafe arrangement, for example, where the signal is defined by the absence of voltage or pressure rather than the presence of voltage or pressure, so that the pilot pressure supply 17 defaults to a depressurised condition if the respective user control or signal carrier for the travel mode control signal 72 from the travel mode control 50, 50' is interrupted or malfunctions.

Thus, if the pilot pressure supply 17 is depressurised (i.e. the pressure is reduced to a nonfunctional level), the tool motion control valve 11 cannot move responsive to user commands from controls 13 and in turn cannot control the downstream valves to cause movement of the actuators 9.

The machine includes a drive system 40 which is controllable by the user by command signals 73 generated by user drive controls 46 to drive the work machine in a direction of movement over the ground surface at a maximum ground speed within the selected ground speed range. The drive controls 46 may include for example a throttle or accelerator pedal 45 as known in the art as well as a speed range control 41.

The speed range control 41 is operable by a user to select a respective one of a low ground speed range and a high ground speed range, which is to say, a ground speed range which provides respectively a relatively lower and a relatively higher maximum ground speed (speed of travel of the machine over the ground). In the illustrated embodiment, the speed range control is a lever which is movable as shown between a first position for the low range and a second position for the high range.

For convenience the low and high speed ranges are referred to hereinafter respectively as the first and second gears. It will be understood of course that the term "gear" as used herein refers merely to the speed range and is intended to embrace any hydrostatic or other transmission system.

The drive system 40 may comprise a hydrostatic transmission system comprising one or more hydraulic motors 42, optionally one per wheel 4 as shown, driven by hydraulic fluid via hydraulic supply lines 43 from the one or more hydraulic pumps 30. Optionally, any or each of the pumps 30 and motors 42 may have a variable displacement controlled by drive signals 73 to select the required ground speed range or gear ratio.

The speed range control 41 is operable and the drive system 40 is controllable by the user to drive the machine at a maximum ground speed within either selected one of the low ground speed range and the high ground speed range in both the travel mode and the work mode.

Optionally, the low ground speed range may be configured to limit the work machine to a first maximum ground speed, and the high ground speed range configured to limit the work machine to a second maximum ground speed in the work mode and a third maximum ground speed in the travel mode. In this case, the second maximum ground speed may be higher than the first maximum ground speed and lower than the third maximum ground speed. Thus, the user may be able to use both first and second gear when in the work mode so as to obtain a higher maximum speed in second gear, providing more convenient operation on the work site, while the maximum speed in second gear is limited relative to that available in travel mode so as to ensure safe operation on the work site.

By way of example, first gear may provide a maximum ground speed of about 11km/h while second gear provides a maximum ground speed of about 20 or 25 km/h in travel mode, reduced to about 15 or 18 km/h in work mode. Of course, the maximum ground speed may be higher or lower as suitable for the particular work machine, for example, up to about 40 km/h or more.

The maximum speed in second gear in work mode may be capped for example by a suitable speed limiting circuit which is arranged for example to limit the variable displacement setting of the main pump 30 and/or drive motors 42 in work mode while permitting a higher ratio in travel mode. Other possible speed limiting techniques will be evident to those skilled in the art.

The machine further includes a primary steering control 60 and a secondary steering control 61. In the illustrated embodiment, the primary steering control 60 is a conventional steering wheel and the secondary steering control 61 is mounted on or forms part of the joystick 14, conveniently as a slider or rocker switch or the like as shown, or alternatively as a selectable function of the movement of the joystick 14 itself. Thus, in work mode the user may conveniently control both the movement of the machine 1 over the ground and the operation of the tool 6 with multiple degrees of freedom by manipulation of the joystick and its associated controls.

Each of the primary and secondary steering controls 60, 61 is selectively and independently operable by the user to control the direction of movement of the machine 1 over the ground surface, which is to say, the user can select either one of the steering controls 60, 61 (depending on whether travel mode or work mode is selected, as further discussed below) and use it independently of the other to control the machine, if desired changing from one steering control to the other as most convenient for the work situation.

The primary and secondary steering controls 60, 61 may act on a steering actuator 62 which controls the direction of motion of the machine over the ground.

Advantageously, the secondary steering control valve 64 may be operable by pilot pressure from a common pilot pressure supply 17 responsive to the secondary steering control 61 to control the steering actuator 62.

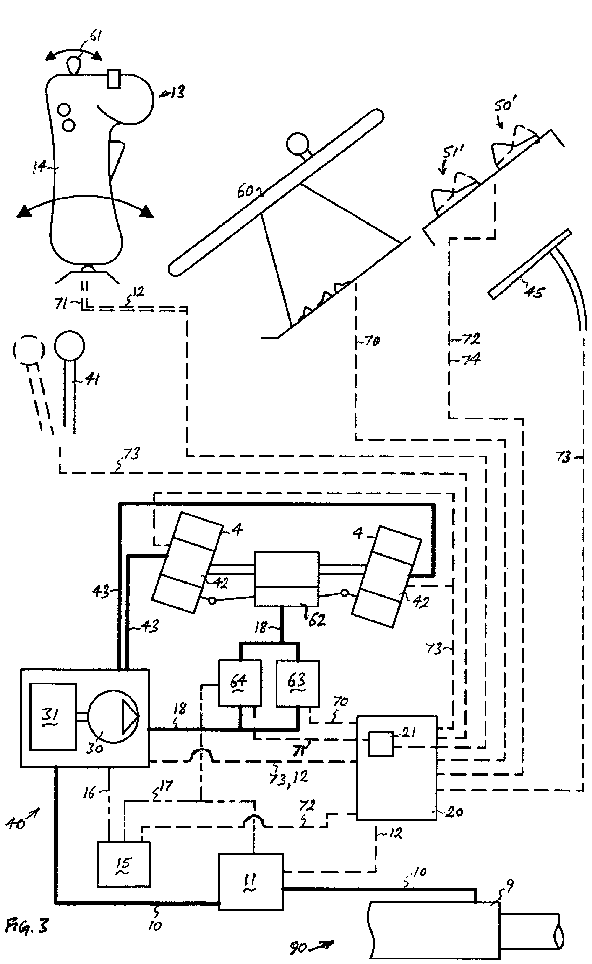

This may be accomplished for example as illustrated in Fig. 3, which is a simplified schematic drawing showing only one axle of the work machine, in which the hydraulic steering actuator 62 is linked to the road wheels 4 and controlled by hydraulic lines 18 from a primary steering control valve 63 and a secondary steering control valve 64.

The primary and secondary steering control valves 63, 64 are supplied with hydraulic fluid via hydraulic lines 18 from the pump 30.

The primary steering control valve 63 controls the supply of hydraulic fluid to the steering actuator 62 responsive to a control signal or signals 70 (either directly or via central controller 20) from the primary steering control 60, and may have a pilot pressure supply direct from the pump or pumps 30, which however is not controlled by the pilot pressure control unit 15. Thus, the pilot pressure control unit 15 does not affect the operation of the primary steering control valve 63.

The secondary steering control valve 64 is operable by the pilot pressure supply 17 from the pilot pressure control unit 15 responsive to a control signal or signals 71 (which may be received directly or, as illustrated, via central controller 20) from the secondary steering control 61 to supply hydraulic fluid via lines 18 to control the movement of the steering actuator 62.

As previously discussed, the travel mode control 50, 50' may be configured to depressurise the pilot pressure supply 17 in the travel mode. Thus, by selecting travel mode, both the secondary steering control valve 64 and the tool motion control valve 11 connected to the common pilot pressure supply 17 are simultaneously disabled. Hence, both the tool actuation system 90 and the secondary steering control 61 are simultaneously disabled.

The travel mode control 50, 50' may be configured as a mechanical or electronic (soft) switch or icon, such as a mechanical rocker switch 50' or an electronic switch 50 or icon on a touchscreen control panel 52 as shown in Figs. 4 - 7, and is operable by the user to configure the machine selectively for operation in the work mode when on the work site, and in a travel mode when the machine is travelling on the public road.

When travel mode is selected, the tool actuation system 90 is disabled to prevent movement of the tool 6 in at least one degree of freedom relative to the machine base 3, and the secondary steering control 61 is also disabled so that, in the disabled condition of the secondary steering control 61, only the primary steering control 60 is operable by the user to control the direction of movement of the machine 1 over the ground surface.

The travel mode control 50, 50' can be arranged in any suitable way to ensure that when travel mode is selected, both the tool actuation system 90 and the secondary steering control 61 are disabled; which is to say, the step of disabling the tool actuation system 90 and the step of disabling the secondary steering control 61 are both executed, and neither step is executed without also executing the other step. Advantageously, both steps may be carried out simultaneously in time, although it is possible alternatively to arrange for one step to be carried out consecutively after the other.

Failsafe operation can be obtained by arranging for both the tool actuation system 90 and the secondary steering control 61 to be operatively dependent on a common supply of power 17, wherein in travel mode the common supply of power is interrupted, which it to say, removed or discontinued so that there is no or insufficient power available to operate the tool actuation system 90 and to steer the vehicle responsive to the secondary steering control 61. The common supply could be for example a supply of electrical power where the systems are configured as electrical actuators, or hydraulic or pneumatic pressure for operating valves, e.g. pilot valves which in turn control main valves for the tool actuators, as illustrated and discussed above. Thus, interrupting the power could mean reducing voltage or current or fluid pressure to a level insufficient for actuation.

The step of disabling the tool actuation system 90 may prevent movement of the tool 6 in one or more degrees of freedom relative to the machine base 3 - for example, by preventing slewing about axis X - X, or to prevent extension of boom 8 or stick 7 - but preferably is arranged to prevent movement of the tool 6 in all of its degrees of freedom, and further may be combined with actuation of a locking arrangement, such as a releasable lock (not shown) to prevent the body 2 (hence also the tool 6) from slewing about axis X - X relative to the base 3, and/or a lock to secure the tool 6 in a fixed position relative to the machine body or base.

Optionally, when travel mode is selected, a sensor may indicate the position of the machine body 2 or tool 6 relative to the machine base 3 and command movement of the machine body 2 or tool 6 to a predefined travel position before engaging the locking arrangement. For example, if the body 2 is slewed on the base 3, selecting travel mode may command a slewing motor (not shown) to rotate the body 2 at low speed to the predefined forwardly facing position as shown in Figs. 1 and 2 and then engage the lock to restrain it in that position relative to the machine base 3. Similarly the position of the tool 6 may be sensed, and the central controller 20 configured to command the actuators 9 to move the tool 6 slowly to the travel position as shown in Fig. 2, optionally also then engaging a lock (not shown) to retain it in that position. Thus, the step of selecting travel mode may initiate a sequence of movements to move the tool 6 to the travel position (Fig. 2), optionally also to lock the tool 6 in the travel position relative to the machine base 3, and a visual or audible indicator associated with the travel mode control may be configured to confirm to the user when the sequence is in progress and/or when it is complete.

Optionally, a secondary steering deselector control 51, 51' may also be provided, for example, as a mechanical switch such as a rocker switch 51' or a soft switch 51 or icon on a touchscreen control panel 52.

The secondary steering deselector control 51, 51' is operable by the user to disable the secondary steering control 61 so that, in the disabled condition of the secondary steering control 61, only the primary steering control 60 is operable by the user to control the direction of movement of the machine 1 over the ground.

Where a secondary steering deselector control 51, 51' is provided, the travel mode control 50, 50' may be operable by the user to configure the machine 1 for operation in the travel mode only after operation of the secondary steering deselector control 51, 51' to disable the secondary steering control 61.

The secondary steering deselector control 51, 51' may be operable to interrupt the control signal 71, for example, by a control signal interruption function 21 integrated into the central controller 20 as shown and responsive to a control signal 74 from the secondary steering deselector control 51, 51', or alternatively for example by configuring the secondary steering deselector control as a mechanical or electronic (soft) switch 51 or 51' and routing a control signal 71 from the secondary steering control 61 through the switch 51, 51' or through a relay or the like controlled by the switch 51, 51'. Those skilled in the art will recognise that many other implementations are possible.

Of course, the secondary steering deselector control 51, 51' may be configured in a failsafe arrangement similarly to the travel mode control 50, 50' as discussed above.

Figs. 4, 5, 6 and 7 illustrate how either or both of the travel mode control 50 and the secondary steering deselector control 51 may be implemented as soft switches or icons on a touchscreen control panel 52, optionally also incorporating signal or indication elements which inform the user when the controls are actuated in a correct or incorrect sequence.

In the illustrated example, the secondary steering control 61 is integrated into a joystick 14 and so secondary steering is referred to in Figs. 8 -11 as "joystick steering", and the secondary steering deselector control 51 is indicated by a joystick icon. For brevity, the travel mode control 50 will be referred to hereinafter as "TMC 50" and the secondary steering deselector control 51 will be referred to as "SSDC 51".

Fig. 10 shows how SSDC 51 is operated at step 201 and at step 202 the control signal interruption function 21 is activated to interrupt the control signal 71 from the secondary steering control 61. Fig. 4 shows the corresponding sequence wherein in state 100 the TMC 50 indicates that travel mode is deselected, and the SSDC 51 indicates that the secondary steering control 61 is active. The user presses the SSDC 51 and at step 101 the icon changes to indicate that secondary steering 61 is inactive.

Fig. 9 shows how at step 208 joystick steering can be selected, corresponding to the user pressing SSDC 51 in state 101 of Fig. 4. If travel mode is off (i.e. deselected or inactive) then at step 210 the control signal 71 is re-established to re-enable secondary steering, corresponding to state 100 in Fig. 4 where the icon changes to indicate that secondary steering is active.

Fig. 11 shows how travel mode can be deselected at step 203 by pressing TMC 50 in state 102 of Fig. 5, where the icon indicates that travel mode is active. Secondary steering is always inactive in travel mode and so the icon at SSDC 51 indicates that secondary steering is inactive. Responsive to pressing TMC 50, the icon changes to state 103 to indicate that travel mode is deselected, which is to say, work mode is selected, corresponding to step 204, wherein the pilot pressure supply 17 is re-established so that the tool controls 13 can be used to actuate the tool 6. The user may now enable secondary steering as described above and shown in Fig. 4 and Fig. 9.

Alternatively, with secondary steering disabled, the user may press TMC 50 again (Fig. 8, step 205) to re-select travel mode, changing from state 103 back to state 102 (Fig. 5) as shown at step 207 (Fig. 8).

Referring now to Fig. 6 and Fig. 8, the user controls may be configured to provide an indication or warning when an incorrect sequence of commands is received.

At step 205 (state 104) the user presses TMC 50 to select travel mode which is currently deselected. However, secondary steering is active. At step 206 a warning signal or prompt is displayed (or alternatively may be issued in audible form, e.g. as a buzzer) to indicate to the user that secondary steering must be deselected before travel mode can be selected. In state 105 the warning is represented by a flashing bar 80 through the travel mode icon and a flashing border 81 around the secondary steering icon.

In the illustrated example, the user must now press the SSDC 51 (state 105, Fig. 4; step 201, Fig. 10) to deselect secondary steering, after which the secondary steering icon changes to state 106 indicating that secondary steering is off (inactive). The user can then press the TMC 50 again (step 205, Fig. 8) to successfully activate travel mode (step 207, Fig. 8), the travel mode icon changing to the active state 107 (Fig. 6) to indicate successful activation.

Alternatively, the control logic may be configured so that after pressing TMC 50 and then SSDC 51 the secondary steering and travel mode functions will both progress to state 107 (Fig. 6) without requiring the additional button press at state 106.

Referring now to Fig. 7 and Fig. 9, if the user attempts to activate secondary steering when travel mode is active (state 108, step 208) then a prompt or warning may be displayed at step 209, for example, as a flashing border 82 around the travel mode icon and a flashing bar 83 through the secondary steering icon.

The user must now press the TMC 50 to deselect travel mode (Fig. 11, step 203) so that the travel mode icon changes to state 110, indicating that travel mode is deselected (step 204) and the machine is now in work mode. The user may now press the SSDC 51 again (step 208, Fig. 9) to re-enable secondary steering (step 210), whereupon the secondary steering icon transitions to the active state 111.

Alternatively, the control logic may be configured so that after pressing SSDC 51 followed by TMC 50 the secondary steering and travel mode functions both transition to state 111 without requiring the additional button press at state 110.

In summary, a work machine with a tool actuation system and primary and secondary steering controls is operable in both first and second gear in both work mode and travel mode. A user operable travel mode control is arranged to disable both the tool actuation system and the secondary steering control when travel mode is selected, optionally by depressurising a common pilot supply of pressurised fluid to pilot valves of the tool actuation and steering systems. Secondary steering may be disabled by a deselector control which must be operated before travel mode can be selected.

### Industrial applicability

The work machine may provide greater convenience for the operator by allowing the use of first and second gear in both work mode and travel mode, optionally with reduced top speed in work mode, while ensuring that secondary steering is effectively disabled while the machine is in travel mode.

Thus, the machine operator may use the joystick to operate the tool and steer the machine in second gear on the worksite, which may be useful for example on larger worksites where the machine has a longer distance to travel between picking up and dumping its load.

The travel mode control 50, 50' (and where provided, the secondary steering deselector control 51, 51') may be provided at a position that requires the operator to reach beyond their normal working position to operate the controls, so as to ensure that they are operated only deliberately and operation is not attempted for example while the machine 1 or the tool 6 is in motion. Experienced machine operators will recognise the travel mode control 50, 50' as a basic safety feature common to many different machine types which must always be properly configured so as to prevent inadvertent movement of the tool 6 (for example, by inadvertent slewing of the machine body 2 or extension of the boom 8 or stick 7) before taking a machine onto the public road. Reliable deactivation of the secondary steering control 61 is therefore assured by arranging for the secondary steering control 61 to be disabled responsive to selection of travel mode.

Experienced machine operators will operate the multifunctional machine controls with great dexterity to coordinate complex movements of the machine body 2, machine base 3 and tool 6 with multiple degrees of freedom, selecting different control configurations including both primary and secondary steering systems 60, 61 to obtain the most efficient working pattern for repetitive tasks. Thus in certain situations the experienced operator may choose to control the machine 1 using both the primary and secondary steering controls 60, 61 in rapid succession.

By providing a secondary steering deselector control 51, 51' which must be operated before the travel mode control 50, 50' can be used to select travel mode, it may be ensured that the experienced machine operator is always consciously aware of the active or deactive state of the secondary steering control 61, and so will not assume that the secondary steering control 61 is active when it is disabled. The secondary steering deselector control 51, 51' can thus function as a practical aid to operator awareness, which function may be reinforced by a suitable arrangement of indicators reflecting the logical sequence of operation of the controls such as described above with reference to Figs. 6 and 7.

By arranging for the secondary steering control system and tool actuation system 90 to carry out their respective control functions dependent on a common pilot pressure supply 17 which is depressurised when travel mode is selected, a failsafe safety system is obtained wherein no single system fault can result in inadvertent activation of the tool 6 or steering actuators 62.

In the illustrated embodiment, the primary and secondary steering controls 60, 61 and the travel mode control 50, 50' and secondary steering deselector control 51, 51' all act through signal or control lines via the central controller 20. In alternative embodiments however, any or all of them could act directly on the respective functional element which they control, for example, by means of a direct electrical, mechanical or fluid pressure signal. For example, the primary steering control 50 could be linked via a mechanical and/or fluid pressure linkage to the wheels or tracks of the machine base.

In alternative embodiments the machine could be configured as an excavator, a backhoe loader or any other desired type. The tool may be a bucket, a breaker, a grab, or any other work implement. It may have tracks instead of wheels. The machine body may slew or may be fixed relative to the machine base. The machine drive and tool actuation systems may employ hydraulic or any other transmission system with one or more tool actuators of any suitable type.

The user controls may comprise a joystick, lever, buttons, touchscreen, pedals, switches, steering wheel, and/or any other desired interface suitable for the respective function.

Those skilled in the art will appreciate that many further adaptations are possible within the scope of the claims.

In the claims, reference numerals or characters are provided in parentheses purely for ease of reference and should not be construed as limiting features.

## Claims

1. A work machine (1) including:
a machine base (3) for supporting the work machine on a ground surface;
a speed range control (41) operable by a user to select a respective one of a low ground speed range and a high ground speed range;
a drive system (40) controllable by the user to drive the work machine in a direction of movement over the ground surface at a maximum ground speed within the selected ground speed range;
a primary steering control (60) and a secondary steering control (61), each of the primary and secondary steering controls being selectively and independently operable by the user to control the direction of movement of the work machine over the ground surface;
a tool actuation system (90) operable by the user in a work mode of the work machine to manipulate a tool (6) mounted on the tool actuation system with at least one degree of freedom relative to the machine base; and
a travel mode control (50, 50') operable by the user to configure the work machine selectively for operation in the work mode and in a travel mode,
wherein in the travel mode the tool actuation system (90) is disabled to prevent movement of said tool in said at least one degree of freedom relative to the machine base; and
wherein in the travel mode the secondary steering control (61) is disabled so that only the primary steering control (60) is operable by the user to control the direction of movement of the work machine over the ground surface, and
wherein the speed range control (41) is operable and the drive system (40) is controllable by the user to drive the work machine at a maximum ground speed within either selected one of the low ground speed range and the high ground speed range in both the travel mode and the work mode.

2. A work machine according to claim 1, wherein the low ground speed range is configured to limit the work machine to a first maximum ground speed, and the high ground speed range is configured to limit the work machine to a second maximum ground speed in the work mode and a third maximum ground speed in the travel mode; and
the second maximum ground speed is higher than the first maximum ground speed and lower than the third maximum ground speed.

3. A work machine according to claim 1, wherein both the tool actuation system (90) and the secondary steering control (61) are operatively dependent on a common supply of power (17), and in the travel mode the common supply of power is interrupted.

4. A work machine according to claim 1, wherein:
the tool actuation system (90) includes
a tool actuator (9) for manipulating the tool (6), and
a tool motion control valve (11) operable by a pilot pressure supply (17) responsive to user commands to control the tool actuator (9); and
the work machine includes
a steering actuator (62) for controlling the direction of motion of the work machine over the ground surface, and
a secondary steering control valve (64) operable by said pilot pressure supply (17) responsive to the secondary steering control (61) to control the steering actuator (62); and
the travel mode control is configured to depressurise the pilot pressure supply (17) in the travel mode.

5. A work machine according to claim 1, wherein a secondary steering deselector control (51, 51') is provided, the secondary steering deselector control being operable by the user to disable the secondary steering control (61) so that only the primary steering control (60) is operable by the user to control the direction of movement of the work machine over the ground surface; and
the travel mode control (50, 50') is operable by the user to configure the work machine for operation in the travel mode only after operation of the secondary steering deselector control (51, 51') to disable the secondary steering control (61).

6. A work machine according to claim 5, wherein:
the tool actuation system (90) includes:
a tool actuator (9) for manipulating the tool, and
a tool motion control valve (11) operable by a pilot pressure supply (17) responsive to user commands to control the tool actuator (9); and
the work machine includes
a steering actuator (62) for controlling the direction of motion of the work machine over the ground surface, and
a secondary steering control valve (64) operable by said pilot pressure supply (17) responsive to a control signal (71) from the secondary steering control (61) to control the steering actuator (62); and
the secondary steering deselector control (51, 51') is operable to interrupt the control signal (71), and
the travel mode control (50, 50') is configured to depressurise the pilot pressure supply (17) in the travel mode.

7. A work machine according to any of claims 1 - 5, wherein a joystick (14) is provided, the joystick comprising a group of user controls including the secondary steering control (61) and a tool control (13) operable by the user to control the tool actuation system (90).

8. A method of controlling a work machine, the work machine (1) including:
a machine base (3) for supporting the work machine on a ground surface;
the method including:
providing a speed range control (41) operable by a user to select a respective one of a low ground speed range and a high ground speed range;
providing a drive system (40) controllable by the user to drive the work machine in a direction of movement over the ground surface at a maximum ground speed within the selected ground speed range;
providing a primary steering control (60) and a secondary steering control (61), each of the primary and secondary steering controls being selectively and independently operable by the user to control the direction of movement of the work machine over the ground surface;
providing a tool actuation system (90) operable by the user in a work mode of the work machine to manipulate a tool (6) mounted on the tool actuation system with at least one degree of freedom relative to the machine base; and
providing a travel mode control (50, 50') operable by the user to configure the work machine selectively for operation in the work mode and in a travel mode,
wherein in the travel mode the tool actuation system (90) is disabled to prevent movement of said tool in said at least one degree of freedom relative to the machine base; and
wherein in the travel mode the secondary steering control (61) is disabled so that only the primary steering control (60) is operable by the user to control the direction of movement of the work machine over the ground surface, and
wherein the speed range control (41) is operable and the drive system (40) is controllable by the user to drive the work machine at a maximum ground speed within either selected one of the low ground speed range and the high ground speed range in both the travel mode and the work mode.

## Patentansprüche

1. Arbeitsmaschine (1), die einschließt:
eine Maschinenbasis (3) zum Tragen der Arbeitsmaschine auf einer Bodenoberfläche;
eine Geschwindigkeitsbereichssteuerung (41), die durch einen Benutzer bedienbar ist, um einen jeweiligen einen von einem niedrigen Bodengeschwindigkeitsbereich und einem hohen Bodengeschwindigkeitsbereich zu selektieren;
ein Antriebssystem (40), das durch den Benutzer steuerbar ist, um die Arbeitsmaschine in einer Bewegungsrichtung über die Bodenoberfläche mit einer maximalen Bodengeschwindigkeit innerhalb des selektierten Bodengeschwindigkeitsbereichs anzutreiben;
eine primäre Lenksteuerung (60) und eine sekundäre Lenksteuerung (61), wobei jede der primären und der sekundären Lenksteuerung durch den Benutzer selektiv und unabhängig bedienbar ist, um die Bewegungsrichtung der Arbeitsmaschine über die Bodenoberfläche zu steuern;
ein Werkzeugbetätigungssystem (90), das durch den Benutzer in einem Arbeitsmodus der Arbeitsmaschine bedienbar ist, um ein Werkzeug (6), das an dem Werkzeugbetätigungssystem mit mindestens einem Freiheitsgrad bezüglich der Maschinenbasis montiert ist, zu manipulieren; und
eine Fahrmodussteuerung (50, 50'), die durch den Benutzer bedienbar ist, um die Arbeitsmaschine für eine Bedienung in dem Arbeitsmodus und in einem Fahrmodus selektiv zu konfigurieren,
wobei in dem Fahrmodus das Werkzeugbetätigungssystem (90) deaktiviert ist, um eine Bewegung des Werkzeugs in dem mindestens einen Freiheitsgrad bezüglich der Maschinenbasis zu verhindern; und
wobei in dem Fahrmodus die sekundäre Lenksteuerung (61) so deaktiviert ist, dass nur die primäre Lenksteuerung (60) durch den Benutzer bedienbar ist, um die Bewegungsrichtung der Arbeitsmaschine über die Bodenoberfläche zu steuern und
wobei die Geschwindigkeitsbereichssteuerung (41) bedienbar ist und das Antriebssystem (40) steuerbar ist durch den Benutzer, um die Arbeitsmaschine mit einer maximalen Bodengeschwindigkeit innerhalb eines selektierten einen von dem niedrigen Bodengeschwindigkeitsbereich und dem hohen Bodengeschwindigkeitsbereich in sowohl dem Fahrmodus als auch dem Arbeitsmodus anzutreiben.

2. Arbeitsmaschine nach Anspruch 1, wobei der niedrige Bodengeschwindigkeitsbereich konfiguriert ist, um die Arbeitsmaschine auf eine erste maximale Bodengeschwindigkeit zu begrenzen und der hohe Bodengeschwindigkeitsbereich konfiguriert ist, um die Arbeitsmaschine auf eine zweite maximale Bodengeschwindigkeit in dem Arbeitsmodus und eine dritte maximale Bodengeschwindigkeit in dem Fahrmodus zu begrenzen; und
die zweite maximale Bodengeschwindigkeit höher als die erste maximale Bodengeschwindigkeit und niedriger als die dritte maximale Bodengeschwindigkeit ist.

3. Arbeitsmaschine nach Anspruch 1, wobei sowohl das Werkzeugbetätigungssystem (90) als auch die sekundäre Lenksteuerung (61) von einer gemeinsamen Leistungsversorgung (17) wirkabhängig sind und in dem Fahrmodus die gemeinsame Leistungsversorgung unterbrochen ist.

4. Arbeitsmaschine nach Anspruch 1, wobei:
das Werkzeugbetätigungssystem (90) einschließt
ein Werkzeugbetätigungselement (9) zum Manipulieren des Werkzeugs (6) und
ein Werkzeuggangsteuerventil (11), das durch eine Vorsteuerdruckversorgung (17) als Reaktion auf Benutzerbefehle bedienbar ist, um das Werkzeugbetätigungselement (9)zu steuern; und
die Arbeitsmaschine einschließt
ein Lenkbetätigungselement (62) zum Steuern der Gangrichtung der Arbeitsmaschine über die Bodenoberfläche und
ein sekundäres Lenksteuerventil (64), das durch die Vorsteuerdruckversorgung (17) als Reaktion auf die sekundäre Lenksteuerung (61) bedienbar ist, um das Lenkbetätigungselement (62) zu steuern; und
die Fahrmodussteuerung konfiguriert ist, um Druck der Vorsteuerdruckversorgung (17) in dem Fahrmodus zu mindern.

5. Arbeitsmaschine nach Anspruch 1, wobei eine sekundäre Lenkdeselektorsteuerung (51, 51') bereitgestellt ist, wobei die sekundäre Lenkdeselektorsteuerung durch den Benutzer bedienbar ist, um die sekundäre Lenksteuerung (61) so zu deaktivieren, dass nur die primäre Lenksteuerung (60) durch den Benutzer bedienbar ist, um die Bewegungsrichtung der Arbeitsmaschine über die Bodenoberfläche zu steuern; und
die Fahrmodussteuerung (50, 50') durch den Benutzer bedienbar ist, um die Arbeitsmaschine für die Bedienung nur nach der Bedienung der sekundären Lenkdeselektorsteuerung (51, 51') zu konfigurieren, um die sekundäre Lenksteuerung (61) zu deaktivieren.

6. Arbeitsmaschine nach Anspruch 5, wobei:
das Werkzeugbetätigungssystem (90) einschließt:
ein Werkzeugbetätigungselement (9) zum Manipulieren des Werkzeugs und
ein Werkzeuggangsteuerventil (11), das durch eine Vorsteuerdruckversorgung (17) als Reaktion auf Benutzerbefehle bedienbar ist, um das Werkzeugbetätigungselement (9)zu steuern; und
die Arbeitsmaschine einschließt
ein Lenkbetätigungselement (62) zum Steuern der Gangrichtung der Arbeitsmaschine über die Bodenoberfläche und
ein sekundäres Lenksteuerventil (64), das durch die Vorsteuerdruckversorgung (17) als Reaktion auf ein Steuersignal (71) aus der sekundären Lenksteuerung (61) bedienbar ist, um das Lenkbetätigungselement (62) zu steuern; und
die sekundäre Lenkdeselektorsteuerung (51, 51') bedienbar ist, um das Steuersignal (71) zu unterbrechen und
die Fahrmodussteuerung (50, 50') konfiguriert ist, um Druck der Vorsteuerdruckversorgung (17) in dem Fahrmodus zu mindern.

7. Arbeitsmaschine nach einem der Ansprüche 1 bis 5, wobei ein Joystick (14) bereitgestellt ist, der Joystick umfassend eine Gruppe von Benutzersteuerungen, die die sekundäre Lenksteuerung (61) und eine Werkzeugsteuerung (13), die durch den Benutzer bedienbar ist, um das Werkzeugbetätigungssystem (90) zu steuern, einschließt.

8. Verfahren zum Steuern einer Arbeitsmaschine, wobei die Arbeitsmaschine (1) einschließt:
eine Maschinenbasis (3) zum Tragen der Arbeitsmaschine auf einer Bodenoberfläche;
wobei das Verfahren einschließt:
Bereitstellen einer Geschwindigkeitsbereichssteuerung (41), die durch einen Benutzer bedienbar ist, um einen jeweiligen einen von einem niedrigen Bodengeschwindigkeitsbereich und einem hohen Bodengeschwindigkeitsbereich zu selektieren;
Bereitstellen eines Antriebssystems (40), das durch den Benutzer steuerbar ist, um die Arbeitsmaschine in einer Bewegungsrichtung über die Bodenoberfläche mit einer maximalen Bodengeschwindigkeit innerhalb des selektierten Bodengeschwindigkeitsbereichs anzutreiben;
Bereitstellen einer primären Lenksteuerung (60) und einer sekundären Lenksteuerung (61), wobei jede der primären und der sekundären Lenksteuerung durch den Benutzer selektiv und unabhängig bedienbar ist, um die Bewegungsrichtung der Arbeitsmaschine über die Bodenoberfläche zu steuern;
Bereitstellen eines Werkzeugbetätigungssystems (90), das durch den Benutzer in einem Arbeitsmodus der Arbeitsmaschine bedienbar ist, um ein Werkzeug (6), das an dem Werkzeugbetätigungssystem mit mindestens einem Freiheitsgrad bezüglich der Maschinenbasis montiert ist, zu manipulieren; und
Bereitstellen einer Fahrmodussteuerung (50, 50'), die durch den Benutzer bedienbar ist, um die Arbeitsmaschine für die Bedienung in dem Arbeitsmodus und in einem Fahrmodus selektiv zu konfigurieren,
wobei in dem Fahrmodus das Werkzeugbetätigungssystem (90) deaktiviert ist, um eine Bewegung des Werkzeugs in dem mindestens einen Freiheitsgrad bezüglich der Maschinenbasis zu verhindern; und
wobei in dem Fahrmodus die sekundäre Lenksteuerung (61) so deaktiviert ist, dass nur die primäre Lenksteuerung (60) durch den Benutzer bedienbar ist, um die Bewegungsrichtung der Arbeitsmaschine über die Bodenoberfläche zu steuern und
wobei die Geschwindigkeitsbereichssteuerung (41) bedienbar ist und das Antriebssystem (40) steuerbar ist durch den Benutzer, um die Arbeitsmaschine mit einer maximalen Bodengeschwindigkeit innerhalb eines selektierten einen von dem niedrigen Bodengeschwindigkeitsbereich und dem hohen Bodengeschwindigkeitsbereich in sowohl dem Fahrmodus als auch dem Arbeitsmodus anzutreiben.

## Revendications

1. Machine de travail (1) comportant :
une base de machine (3) destinée à supporter la machine de travail sur une surface de sol ;
une commande de plage de vitesse (41) utilisable par un utilisateur pour choisir une plage respective parmi une plage de vitesse au sol faible et une plage de vitesse au sol élevée ;
un système d'entraînement (40) pouvant être commandé par l'utilisateur pour entraîner la machine de travail dans une direction de déplacement sur la surface de sol à une vitesse au sol maximale dans la plage de vitesse au sol choisie ;
une commande de direction primaire (60) et une commande de direction secondaire (61), chacune des commandes de direction primaire et secondaire étant utilisable sélectivement et indépendamment par l'utilisateur pour commander la direction de déplacement de la machine de travail sur la surface de sol ;
un système d'actionnement d'outil (90) utilisable par l'utilisateur en mode de travail de la machine de travail pour manipuler un outil (6) monté sur le système d'actionnement d'outil avec au moins un degré de liberté par rapport à la base de machine ; et
une commande de mode de déplacement (50, 50') utilisable par l'utilisateur pour configurer la machine de travail sélectivement pour un fonctionnement en mode de travail et en mode de déplacement,
dans laquelle, en mode de déplacement, le système d'actionnement d'outil (90) est désactivé pour empêcher le mouvement dudit outil dans ledit au moins un degré de liberté par rapport à la base de machine ; et
dans laquelle, en mode de déplacement, la commande de direction secondaire (61) est désactivée de sorte que seule la commande de direction primaire (60) est utilisable par l'utilisateur pour commander la direction de déplacement de la machine de travail sur la surface de sol, et
dans laquelle la commande de plage de vitesse (41) est utilisable et le système d'entraînement (40) peut être commandé par l'utilisateur pour entraîner la machine de travail à une vitesse au sol maximale dans l'une ou l'autre des plages de vitesse au sol maximale faible et élevée choisies, à la fois en mode de déplacement et en mode de travail.

2. Machine de travail selon la revendication 1, dans laquelle la plage de vitesse au sol faible est configurée pour limiter la machine de travail à une première vitesse au sol maximale, et la plage de vitesse au sol élevée est configurée pour limiter la machine de travail à une deuxième vitesse au sol maximale en mode de travail et une troisième vitesse au sol maximale en mode de déplacement ; et
la deuxième vitesse au sol maximale est supérieure à la première vitesse au sol maximale et inférieure à la troisième vitesse au sol maximale.

3. Machine de travail selon la revendication 1, dans laquelle à la fois le système d'actionnement d'outil (90) et la commande de direction secondaire (61) sont fonctionnellement dépendants d'une alimentation en énergie commune (17), et en mode de déplacement, l'alimentation en énergie commune est interrompue.

4. Machine de travail selon la revendication 1, dans laquelle :
le système d'actionnement d'outil (90) comporte
un actionneur d'outil (9) permettant de manipuler l'outil (6), et
une soupape de commande de mouvement d'outil (11) utilisable par une alimentation en pression pilote (17) en réponse à des commandes d'utilisateur pour commander l'actionneur d'outil (9) ; et
la machine de travail comporte
un actionneur de direction (62) permettant de commander la direction de mouvement de la machine de travail sur la surface de sol, et
une soupape de commande de direction secondaire (64) utilisable par ladite alimentation en pression pilote (17) en réponse à la commande de direction secondaire (61) pour commander l'actionneur de direction (62) ; et
la commande de mode de déplacement est configurée pour dépressuriser l'alimentation en pression pilote (17) en mode de déplacement.

5. Machine de travail selon la revendication 1, dans laquelle une commande de désélecteur de direction secondaire (51, 51') est prévue, la commande de désélecteur de direction secondaire étant utilisable par l'utilisateur pour désactiver la commande de direction secondaire (61) de sorte que seule la commande de direction primaire (60) est utilisable par l'utilisateur pour commander la direction de déplacement de la machine de travail sur la surface de sol ; et
la commande de mode de déplacement (50, 50') est utilisable par l'utilisateur pour configurer la machine de travail pour un fonctionnement en mode de déplacement uniquement après l'utilisation de la commande de désélecteur de direction secondaire (51, 51') pour désactiver la commande de direction secondaire (61).

6. Machine de travail selon la revendication 5, dans laquelle :
le système d'actionnement d'outil (90) comporte :
un actionneur d'outil (9) permettant de manipuler l'outil, et
une soupape de commande de mouvement d'outil (11) utilisable par une alimentation en pression pilote (17) en réponse à des commandes d'utilisateur pour commander l'actionneur d'outil (9) ; et
la machine de travail comporte
un actionneur de direction (62) permettant de commander la direction de mouvement de la machine de travail sur la surface de sol, et
une soupape de commande de direction secondaire (64) utilisable par ladite alimentation en pression pilote (17) en réponse à un signal de commande (71) provenant de la commande de direction secondaire (61) pour commander l'actionneur de direction (62) ; et
la commande de désélecteur de direction secondaire (51, 51') est utilisable pour interrompre le signal de commande (71), et
la commande de mode de déplacement (50, 50') est configurée pour dépressuriser l'alimentation en pression pilote (17) en mode de déplacement.

7. Machine de travail selon l'une quelconque des revendications 1 à 5, dans laquelle un levier de commande (14) est prévu, le levier de commande comprenant un groupe de commandes utilisateur comportant la commande de direction secondaire (61) et une commande d'outil (13) utilisable par l'utilisateur pour commander le système d'actionnement d'outil (90).

8. Procédé de commande d'une machine de travail, la machine de travail (1) comportant :
une base de machine (3) destinée à supporter la machine de travail sur une surface de sol ;
le procédé comportant :
la fourniture d'une commande de plage de vitesse (41) utilisable par un utilisateur pour choisir une plage respective parmi une plage de vitesse au sol faible et une plage de vitesse au sol élevée ;
la fourniture d'un système d'entraînement (40) pouvant être commandé par l'utilisateur pour entraîner la machine de travail dans une direction de déplacement sur la surface de sol à une vitesse au sol maximale dans la plage de vitesse au sol sélectionnée ;
la fourniture d'une commande de direction primaire (60) et d'une commande de direction secondaire (61), chacune des commandes de direction primaire et secondaire étant utilisable sélectivement et indépendamment par l'utilisateur pour commander la direction de déplacement de la machine de travail sur la surface de sol ;
la fourniture d'un système d'actionnement d'outil (90) utilisable par l'utilisateur en mode de travail de la machine de travail pour manipuler un outil (6) monté sur le système d'actionnement d'outil avec au moins un degré de liberté par rapport à la base de machine ; et
la fourniture d'une commande de mode de déplacement (50, 50') utilisable par l'utilisateur pour configurer la machine de travail sélectivement pour un fonctionnement en mode de travail et en mode de déplacement,
dans lequel, en mode de déplacement, le système d'actionnement d'outil (90) est désactivé pour empêcher le mouvement dudit outil dans ledit au moins un degré de liberté par rapport à la base de machine ; et
dans lequel, en mode de déplacement, la commande de direction secondaire (61) est désactivée de sorte que seule la commande de direction primaire (60) est utilisable par l'utilisateur pour commander la direction de déplacement de la machine de travail sur la surface de sol, et
dans lequel la commande de plage de vitesse (41) est utilisable et le système d'entraînement (40) peut être commandé par l'utilisateur pour entraîner la machine de travail à une vitesse au sol maximale dans l'une ou l'autre des plages de vitesse au sol faible et élevée choisies, à la fois en mode de déplacement et en mode de travail.
